# EUROPÄISCHE PATENTSCHRIFT

(11) **EP 3 616 985 B1**
(45) Veröffentlichungstag und Bekanntmachung des Hinweises auf die Patenterteilung: **16.06.2021**
(21) Anmeldenummer: 18191387.2
(22) Anmeldetag: 29.08.2018
(51) Int. Cl.: B60N 2/90, B60N 2/02

(54) **SEITENWANGE FÜR EINEN FAHRZEUGSITZ, FAHRZEUGSITZ**
SIDE PLATE FOR A VEHICLE SEAT AND VEHICLE SEAT
JOUES LATÉRALES POUR UN SIÈGE DE VÉHICULE, SIÈGE DE VÉHICULE

(43) Veröffentlichungstag der Anmeldung: 04.03.2020
(73) Patentinhaber: Adient Engineering and IP GmbH, 51399 Burscheid (DE)
(72) Erfinder: Schuele, Robert, 71034 Boeblingen (DE); Schmodde, Hans, 70563 Vaihingen (DE)
(74) Vertreter: Liedhegener, Ralf

(56) Entgegenhaltungen:
- US-A1- 2009 218 858

## Beschreibung

Die Erfindung betrifft eine Seitenwange für einen Fahrzeugsitz mit einem metallischen Rahmenabschnitt, wobei der Rahmenabschnitt einen freigeschnittenen Stützabschnitt zur Stützung einer Polsterung der Seitenwange aufweist, wobei der Stützabschnitt biegeelastisch ist und zur Stützung der Polsterung in einer Normalstellung von dem Rahmenabschnitt absteht.

Die Erfindung betrifft weiter einen Fahrzeugsitz.

### Stand der Technik

Aus der DE 199 43 996 A1 ist es bekannt, dass bei einem Fahrzeugsitz, insbesondere einem Kraftfahrzeugsitz, mit wenigstens einem Paar von Seitenwangen am Sitzteil und/oder an der Rückenlehne, die Seitenwangen automatisch einstellbar sind.

Aus der DE 196 05 779 C2 ist ein Fahrzeugsitz bekannt, der aus einem Sitzteil mit verstellbaren Sitzwangen und einem Lehnenteil mit verstellbaren Lehnenwangen besteht, wobei die Sitzwangen und/oder die Lehnenwangen als Wangenpolsterteile beweglich gehalten und über eine mechanische Verstelleinrichtung von einer weiten, zur Fahrzeugsitzaußenseite hin liegenden Position in eine schmale, zur Fahrzeugsitzmitte hin liegenden Position verstellbar sind.

Aus der US 2009/0218858 A1 ist ein beeinflussbares Sitzpolster bekannt, das zur Betätigung ein aktives Material einsetzt, um eine Änderung zumindest eines Zustandes, der durch das Polster definiert ist, zu bewirken oder zu ermöglichen. Das beeinflussbare Sitzpolster weist einen metallischen Rahmenabschnitt auf, wobei der Rahmenabschnitt einen freigeschnittenen Stützabschnitt zur Stützung einer Polsterung der Seitenwange aufweist, wobei der Stützabschnitt biegeelastisch ist und zur Stützung der Polsterung in einer Normalstellung von dem Rahmenabschnitt absteht, wobei wenigstens ein elektrisch steuerbarer Aktuator vorgesehen ist, welcher den Stützabschnitt unter Erzeugung einer Kraft von der Normalstellung in eine eingezogene Stellung überführt, wobei der Aktuator einen Draht aus einer Formgedächtnislegierung aufweist.

### Aufgabe

Der Erfindung liegt die Aufgabe zu Grunde, eine Seitenwange der eingangs genannten Art zu verbessern, insbesondere die Möglichkeiten einer geräuscharmen und schnellen Einstellung der Seitenwange zu schaffen, sowie einen entsprechenden Fahrzeugsitz bereitzustellen. Zudem soll eine elektrisch betreibbare Einstiegshilfe bereitgestellt werden.

### Lösung

Diese Aufgabe wird erfindungsgemäß gelöst durch eine Seitenwange für einen Fahrzeugsitz, insbesondere Kraftfahrzeugsitz, mit einem metallischen Rahmenabschnitt, wobei der Rahmenabschnitt einen freigeschnittenen Stützabschnitt zur Stützung einer Polsterung der Seitenwange aufweist, wobei der Stützabschnitt biegeelastisch ist und zur Stützung der Polsterung in einer Normalstellung von dem Rahmenabschnitt absteht, wobei wenigstens ein elektrisch steuerbarer Aktuator, insbesondere zu Reduktion einer Höhe der Seitenwange, vorgesehen ist, welcher den Stützabschnitt unter Erzeugung einer Kraft von der Normalstellung in eine eingezogene Stellung überführt, wobei der Aktuator einen Draht aus einer Formgedächtnislegierung aufweist, wobei der Draht zur Anbindung an einen Masseleiter einenends elektrisch leitend mit dem Stützabschnitt verbunden ist und anderenends mit einer elektrischen Energiequelle verbindbar ist.

Dadurch, dass wenigstens ein elektrisch steuerbarer Aktuator, insbesondere zu Reduktion einer Höhe der Seitenwange, vorgesehen ist, welcher den Stützabschnitt unter Erzeugung einer Kraft von der Normalstellung in eine eingezogene Stellung überführt, lässt sich ein Überstand der Seitenwange gegenüber einem Sitzteil oder einer Lehne eines Fahrzeugsitzes auf einfache Weise reduzieren und einstellen.

Eine einseitige Anbindung des Drahtes an dem metallischen Rahmenabschnitt, welcher als ein Masseleiter mit der Fahrzeugkarosserie verbunden ist, schafft in vorteilhafter Weise die Anforderung von lediglich einer einadrigen Ansteuerleitung bzw. Versorgungsleitung im Kabelbaum des Fahrzeugsitzes.

Vorteilhafte Ausgestaltungen, welche einzeln oder in Kombination miteinander eingesetzt werden können, werden nachfolgend beschrieben und sind Gegenstand der Unteransprüche.

Der metallische Rahmenabschnitt der Seitenwange ist bevorzugt aus einem Metallblech gefertigt. Der Stützabschnitt kann aus Metallblech, bevorzugt aus Federblech, insbesondere aus einem Blech aus Federstahl, gefertigt sein. Der Rahmenabschnitt kann aus einem dickeren Metallblech gefertigt sein, als der Stützabschnitt.

Der Aktuator kann ein elektrisch steuerbarer Formgedächtnisaktuator sein. Formgedächtnisaktuatoren weisen den Vorteil auf, dass diese einen sehr schnellen und verzögerungsfreien Schaltvorgang ermöglichen.

Bevorzugt verläuft der Draht mäanderförmig zwischen ersten Umlenkpunkten und zweiten Umlenkpunkten.

Der Draht kann mittels einer Schutzhülle thermisch isoliert sein. Der Draht kann mittels einer Schutzhülle elektrisch isoliert sein. Hierdurch lässt sich eine Stromaufnahme und einer Temperaturentwicklung durch den Draht kontrollieren. Wird der Draht beispielsweise bestromt, heizt sich dieser auf zieht sich bevorzugt bei Erreichen einer Schalttemperatur von ca. 90°C sehr schnell zusammen.

Trotz einer vergleichsweise sehr geringen Verkürzung des Aktuators, insbesondere eines Drahtes des Aktuators, im Bereich von lediglich 7% bis 10%, können dennoch große Kräfte erzeugt werden.

Der Aktuator kann derart mit dem Stützabschnitt verbunden sein, dass eine Betätigung des Aktuators den Stützabschnitt in Richtung einer unteren Endstellung bewegt.

Eine obere Kante des Stützabschnitts kann in der Normalstellung in Vertikalrichtung einen ersten Überstand von einer gegenüberliegenden Kante des Rahmenabschnitts aufweisen. Eine obere Kante des Stützabschnitts kann in der eingezogenen Stellung in Vertikalrichtung einen zweiten Überstand von einer gegenüberliegenden Kante des Rahmenabschnitts aufweisen. Vorzugsweise ist der zweite Überstand kleiner als der erste Überstand.

Diese Aufgabe wird ferner erfindungsgemäß gelöst durch einen Fahrzeugsitz, insbesondere Kraftfahrzeugsitz, aufweisend wenigstens eine Seitenwange gemäß der vorhergehenden Beschreibung.

Der Rahmenabschnitt der Seitenwange kann integral in einer Sitzkissenschale des Fahrzeugsitzes gefertigt sein. Alternativ kann der Rahmenabschnitt der Seitenwange als eine an einer Sitzkissenschale fixierbare Sitzteilverbreitung gefertigt sein. Der Rahmenabschnitt der Seitenwange kann integral in einem Rahmen einer Lehne gefertigt sein. Alternativ kann der Rahmenabschnitt der Seitenwange als ein an einem Rahmen einer Lehne fixierbares Seitenwangenmodul gefertigt sein.

Zur Bereitstellung einer Funktion einer Einstiegshilfe kann eine Steuerung vorgesehen sein, welche den Aktuator der einer Fahrzeugtür zugewandten Seitenwange in Abhängigkeit einer Information über einen Öffnungswinkel oder Öffnungsgrad der Fahrzeugtür betätigt. Insbesondere kann der Stützabschnitt in die eingezogene Stellung bewegt werden, wenn eine dem Fahrzeugsitz benachbarte Fahrzeugtür geöffnet wird und in der eingezogenen Stellung gehalten werden, solange die entsprechende Fahrzeugtür geöffnet ist.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestelltes vorteilhaftes Ausführungsbeispiel näher erläutert. Die Erfindung ist jedoch nicht auf dieses Ausführungsbeispiel beschränkt. Es zeigen:
- Fig. 1:: eine schematische Darstellung eines Fahrzeugsitzes,
- Fig. 2:: eine schematische Darstellung eines an einem Stützabschnitt angeordneten Aktuators,
- Fig. 3:: eine Ansicht eines Querschnitts einer erfindungsgemäßen Seitenwange mit dem Stützabschnitt in einer Normalstellung, und
- Fig. 4:: eine Ansicht eines Querschnitts der Seitenwange von Fig. 3 mit dem Stützabschnitt in einer eingezogenen Stellung.

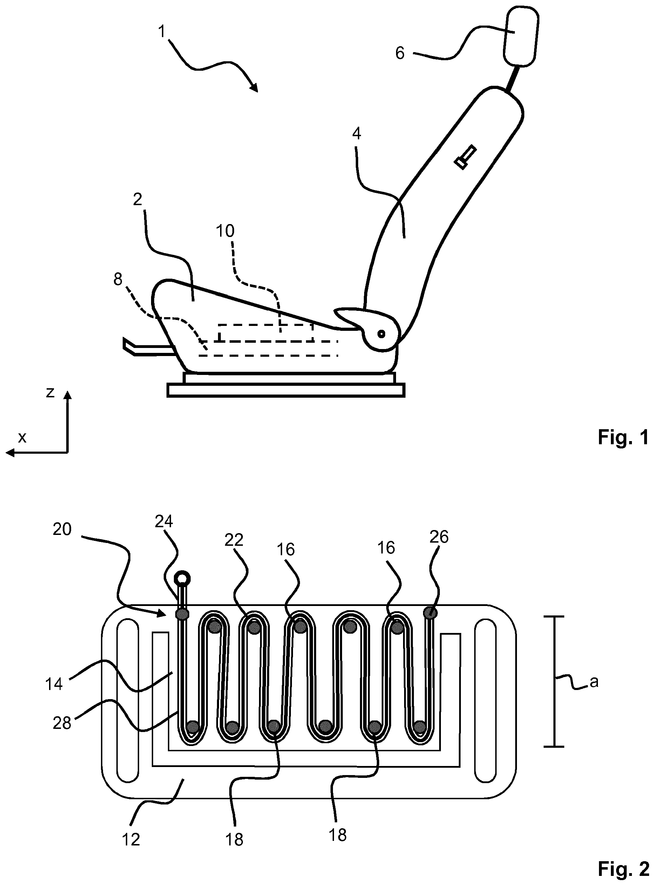

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrechtstehender Lehne 4 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der in Fig. 1 gezeigte Fahrzeugsitz 1, insbesondere Kraftfahrzeugsitz, weist ein Sitzteil 2 und eine gelenkig relativ zum Sitzteil 2 schwenkbare Lehne 4 auf. Die Lehne 4 hält an ihrem dem Sitzteil 2 abgewandten Ende eine Kopfstütze 6. Das Sitzteil 2 weist eine innenliegende Sitzkissenschale 8 auf, welche als Träger für eine Polsterung des Sitzteils 2 dient. Der Fahrzeugsitz 1 weist wenigstens eine Seitenwange 10 auf. Die Seitenwange 10 ist integral in der Sitzkissenschale 8 ausgebildet. Die Seitenwange 10 kann jedoch ebenfalls als eine an der Sitzkissenschale 8 fixierte, separat gefertigte Sitzteilverbreitung ausgebildet sein.

Der Fahrzeugsitz 1 kann eine Steuerung zur Bereitstellung einer Funktion einer Einstiegshilfe aufweisen, welche einen nachfolgend näher beschriebenen Aktuator 20 der einer Fahrzeugtür zugewandten Seitenwange 10 in Abhängigkeit einer Information über einen Öffnungswinkel oder Öffnungsgrad der Fahrzeugtür betätigt. Insbesondere derart betätigt, dass ein Überstand der Oberkante der Seitenwange 10 über eine Sitzfläche reduziert wird, wenn die Fahrzeugtür geöffnet wird und ein Insasse einsteigen oder aussteigen möchte.

Fig. 2 zeigt einen Aktuator 20, welcher an einem Stützabschnitt 14 eines Rahmenabschnitts 12 der Seitenwange 10 angeordnet ist. Der Aktuator 20 ist vorliegend ein Formgedächtnisaktuator. Der Aktuator 20 weist einen Draht 22 aus einer Formgedächtnislegierung auf. Der Draht 22 ist mäanderförmig zwischen ersten Umlenkpunkten 16 und zweiten Umlenkpunkten 18 verlaufend an dem Stützabschnitt 14 angeordnet. Die ersten Umlenkpunkte 16 sind in einem Abstand a zu den zweiten Umlenkpunkten 18 angeordnet. Der Draht 22 ist wenigstens an seinen beiden Enden 24, 26 fixiert an dem Stützabschnitt 14 gehalten. Der Draht 22 weist eine Schutzhülle 28 zur thermischen Isolierung und/oder zur elektrischen Isolierung auf. Der Draht 22 ist zur Anbindung an einen Masseleiter im Bereich seines zweiten Endes 26 elektrisch leitend mit dem metallischen Stützabschnitt 14 verbunden. Der Draht 22 ist an seinem ersten Ende 14 mit einer elektrischen Energiequelle verbindbar.

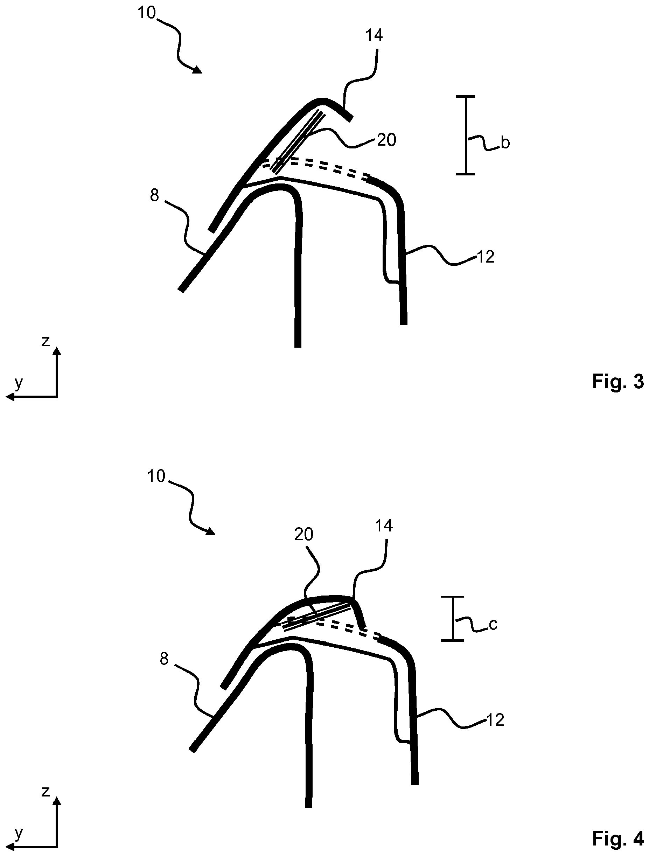

Die Figuren 3 und 4 zeigen je eine Querschnittsansicht einer Seitenwange 10. In der Darstellung von Fig. 3 ist der Stützabschnitt 14 in einer Normalstellung und in der Darstellung von Fig. 4 ist der Stützabschnitt 14 in einer eingezogenen Stellung.

Die Seitenwange 10 weist den metallischen Rahmenabschnitt 12 auf, wobei der Rahmenabschnitt 12 den freistehenden Stützabschnitt 14 zur Stützung einer nicht dargestellten Polsterung der Seitenwange 10 aufweist. Der Stützabschnitt 14 ist biegeelastisch und steht zur Stützung der Polsterung von dem Rahmenabschnitt 12 ab. Die Seitenwange 10 weist wenigstens einen elektrisch steuerbaren Aktuator 20 auf, welcher den Stützabschnitt 14 unter Erzeugung einer Kraft von der Normalstellung gemäß der Darstellung von Fig. 3 in eine eingezogene Stellung gemäß der Darstellung von Fig. 4 überführt.

Der Aktuator 20 ist vorliegend an dem Stützabschnitt 14 anliegend angeordnet. Der Aktuator 20 ist derart mit dem Stützabschnitt 14 verbunden, dass eine Betätigung des Aktuators 20 den Stützabschnitt 14 in Richtung einer unteren Endstellung bewegt. Der Aktuator 20 wirkt zusammen mit dem Stützabschnitt 14 nach Art und Weise eines Bimetallstreifens. Die Bestromung und eine hieraus erfolgende Erwärmung des Drahtes 22 bewirkt ein zusammenziehen des Drahtes 22, in Folge dessen sich der vom Rahmenabschnitt 12 abstehende Stützabschnitt 14 in Richtung des Rahmenabschnitts 12 krümmt. Ausgehend von der Normalstellung, wobei eine obere Kante des Stützabschnitts 14 einen ersten Überstand b von einer gegenüberliegenden Kante des Rahmenabschnitts 12 aufweist, wird der Stützabschnitt 14 derart gekrümmt, dass dieser in der eingezogenen Stellung lediglich noch einen zweiten Überstand c gegenüber der Kante des Rahmenabschnitts 12 aufweist.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, soweit sie nicht vom Schutzbereich der Ansprüche abweichen.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt, soweit sie nicht vom Schutzbereich der Ansprüche abweicht. Weitere Varianten der Erfindung und ihre Ausführung ergeben sich für den Fachmann aus der vorangegangenen Offenbarung, den Figuren und den Ansprüchen, soweit sie nicht vom Schutzbereich der Ansprüche abweichen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Kopfstütze
- 8: Sitzkissenschale
- 10: Seitenwange
- 12: Rahmenabschnitt
- 14: Stützabschnitt
- 16: erster Umlenkpunkt
- 18: zweiter Umlenkpunkt
- 20: Aktuator
- 22: Draht
- 24: erste Ende
- 26: zweites Ende
- 28: Schutzhülle
- a: Abstand
- b: erster Überstand
- c: zweiter Überstand
- x: Längsrichtung
- y: Querrichtung
- z: Vertikalrichtung

## Patentansprüche

1. Seitenwange (10) für einen Fahrzeugsitz (1), insbesondere Kraftfahrzeugsitz, mit einem metallischen Rahmenabschnitt (12), wobei der Rahmenabschnitt (12) einen freigeschnittenen Stützabschnitt (14) zur Stützung einer Polsterung der Seitenwange (10) aufweist, wobei der Stützabschnitt (14) biegeelastisch ist und zur Stützung der Polsterung in einer Normalstellung von dem Rahmenabschnitt (12) absteht, wobei wenigstens ein elektrisch steuerbarer Aktuator (20) vorgesehen ist, welcher den Stützabschnitt (14) unter Erzeugung einer Kraft von der Normalstellung in eine eingezogene Stellung überführt, der Aktuator (20) einen Draht (22) aus einer Formgedächtnislegierung aufweist,
**dadurch gekennzeichnet, dass**
der Draht (22) zur Anbindung an einen Masseleiter einenends elektrisch leitend mit dem Stützabschnitt (14) verbunden ist und anderenends mit einer elektrischen Energiequelle verbindbar ist.

2. Seitenwange (10) gemäß Anspruch 1, wobei der Aktuator (20) ein Formgedächtnisaktuator ist.

3. Seitenwange (10) gemäß einem der Ansprüche 1 oder 2, wobei der Draht (22) mäanderförmig zwischen ersten Umlenkpunkten (16) und zweiten Umlenkpunkten (18) verläuft.

4. Seitenwange (10) gemäß einem der Ansprüche 1 bis 3, wobei der Draht (22) mittels einer Schutzhülle (28) thermisch isoliert ist.

5. Seitenwange (10) gemäß einem der Ansprüche 1 bis 4, wobei die vom Aktuator (20) erzeugte Kraft im Bereich von 300 bis 400 Nm/mm² liegt.

6. Seitenwange (10) gemäß einem der Ansprüche 1 bis 5, wobei der Aktuator (20) derart mit dem Stützabschnitt (14) verbunden ist, dass eine Betätigung des Aktuators (20) den Stützabschnitt (14) in Richtung einer unteren Endstellung bewegt.

7. Seitenwange (10) gemäß einem der Ansprüche 1 bis 6, wobei eine obere Kante des Stützabschnitts (14) in der Normalstellung in Vertikalrichtung (z) einen ersten Überstand (b) von einer gegenüberliegenden Kante des Rahmenabschnitts (12) aufweist.

8. Seitenwange (10) gemäß einem der Ansprüche 1 bis 7, wobei eine obere Kante des Stützabschnitts (14) in der eingezogenen Stellung in Vertikalrichtung (z) einen zweiten Überstand (c) von einer gegenüberliegenden Kante des Rahmenabschnitts (12) aufweist.

9. Fahrzeugsitz (1), insbesondere Kraftfahrzeugsitz, aufweisend wenigstens eine Seitenwange (10) gemäß einem der Ansprüche 1 bis 8.

10. Fahrzeugsitz (1) gemäß Anspruch 9, wobei der Rahmenabschnitt (12) der Seitenwange (10) integral in einer Sitzkissenschale (8) gefertigt ist.

11. Fahrzeugsitz (1) gemäß Anspruch 9, wobei der Rahmenabschnitt (12) der Seitenwange (10) als eine an einer Sitzkissenschale (8) fixierte Sitzteilverbreitung gefertigt ist.

12. Fahrzeugsitz (1) gemäß einem der Ansprüche 9 oder 11, wobei der Rahmenabschnitt (12) der Seitenwange (10) integral in einem Rahmen einer Lehne (4) gefertigt ist.

13. Fahrzeugsitz (1) gemäß einem der Ansprüche 9 oder 12, wobei eine Steuerung zur Bereitstellung einer Funktion einer Einstiegshilfe vorgesehen ist, welche den Aktuator (20) der einer Fahrzeugtür zugewandten Seitenwange (10) in Abhängigkeit einer Information über einen Öffnungswinkel oder Öffnungsgrad der Fahrzeugtür betätigt.

## Claims

1. Side member (10) for a vehicle seat (1), in particular a motor vehicle seat, with a metallic frame section (12), wherein the frame section (12) has an exposed supporting section (14) for supporting a padding of the side member (10), wherein the supporting section (14) is flexurally elastic and, in a normal position, protrudes from the frame section (12) in order to support the padding, wherein at least one electrically controllable actuator (20) is provided, which, by generating a force, transfers the supporting section (14) from the normal position into a retracted position, the actuator (20) has a wire (22) made from a shape memory alloy,
**characterized in that**,
for connection to an earth conductor, the wire (22) is connected at one end in an electrically conducting manner to the supporting section (14) and at the other end to an electrical energy source.

2. Side member (10) according to Claim 1, wherein the actuator (20) is a shape memory actuator.

3. Side member (10) according to either of Claims 1 and 2, wherein the wire (22) runs in a meandering manner between first deflection points (16) and second deflection points (18).

4. Side member (10) according to one of Claims 1 to 3, wherein the wire (22) is thermally insulated by means of a protective sheath (28).

5. Side member (10) according to one of Claims 1 to 4, wherein the force generated by the actuator (20) lies within the range of 300 to 400 Nm/mm².

6. Side member (10) according to one of Claims 1 to 5, wherein the actuator (20) is connected to the supporting section (14) in such a manner that actuation of the actuator (20) moves the supporting section (14) in the direction of a lower end position.

7. Side member (10) according to one of Claims 1 to 6, wherein, in the normal position, an upper edge of the supporting section (14) has a first excess length (b) in a vertical direction (z) from an opposite edge of the frame section (12).

8. Side member (10) according to one of Claims 1 to 7, wherein, in the retracted position, an upper edge of the supporting section (14) has a second excess length (c) in the vertical direction (z) from an opposite edge of the frame section (12).

9. Vehicle seat (1), in particular a motor vehicle seat, having at least one side member (10) according to one of Claims 1 to 8.

10. Vehicle seat (1) according to Claim 9, wherein the frame section (12) of the side member (10) is manufactured integrally in a seat cushion shell (8).

11. Vehicle seat (1) according to Claim 9, wherein the frame section (12) of the side member (10) is manufactured as a seat part widening means fixed to a seat cushion shell (8).

12. Vehicle seat (1) according to either of Claims 9 and 11, wherein the frame section (12) of the side member (10) is manufactured integrally in a frame of a backrest (4).

13. Vehicle seat (1) according to either of Claims 9 and 12, wherein a controller is provided for supplying an entry aid function, said controller actuating the actuator (20) of the side member (10) facing a vehicle door depending on information about an opening angle or degree of opening of the vehicle door.

## Revendications

1. Joue latérale (10) pour un siège de véhicule (1), en particulier un siège de véhicule automobile, comprenant une partie de cadre métallique (12), la partie de cadre (12) présentant une partie de support découpée (14) pour supporter un rembourrage de la joue latérale (10), la partie de support (14) étant élastique en flexion et faisant saillie à partir de la partie de cadre (12) pour supporter le rembourrage dans une position normale, au moins un actionneur (20) à commande électrique étant prévu qui, en produisant une force, fait passer la partie de support (14) de la position normale à une position rentrée, l'actionneur (20) présentant un fil métallique (22) en alliage à mémoire de forme,
**caractérisée en ce que** pour le raccordement à un conducteur de terre, le fil métallique (22) est relié à une extrémité de manière électriquement conductrice à la partie de support (14) et à l'autre extrémité à une source d'énergie électrique.

2. Joue latérale (10) selon la revendication 1, dans laquelle l'actionneur (20) est un actionneur à mémoire de forme.

3. Joue latérale (10) selon l'une quelconque des revendications 1 et 2, dans laquelle le fil métallique (22) s'étend en forme de méandre entre des premiers points de renvoi (16) et des deuxièmes points de renvoi (18) .

4. Joue latérale (10) selon l'une quelconque des revendications 1 à 3, dans laquelle le fil métallique (22) est isolé thermiquement au moyen d'une gaine de protection (28).

5. Joue latérale (10) selon l'une quelconque des revendications 1 à 4, dans laquelle la force produite par l'actionneur (20) est comprise dans la plage de 300 à 400 Nm/mm².

6. Joue latérale (10) selon l'une quelconque des revendications 1 à 5, dans laquelle l'actionneur (20) est relié à la partie de support (14) de telle sorte qu'un actionnement de l'actionneur (20) déplace la partie de support (14) en direction d'une position d'extrémité inférieure.

7. Joue latérale (10) selon l'une quelconque des revendications 1 à 6, dans laquelle un bord supérieur de la partie de support (14) dans la position normale présente dans la direction verticale (z) une première partie en saillie (b) par rapport à un bord opposé de la partie de cadre (12).

8. Joue latérale (10) selon l'une quelconque des revendications 1 à 7, dans laquelle un bord supérieur de la partie de support (14) dans la position rentrée présente dans la direction verticale (z) une deuxième partie en saillie (c) par rapport à un bord opposé de la partie de cadre (12).

9. Siège de véhicule (1), en particulier siège de véhicule automobile, présentant au moins une joue latérale (10) selon l'une quelconque des revendications 1 à 8.

10. Siège de véhicule (1) selon la revendication 9, dans lequel la partie de cadre (12) de la joue latérale (10) est fabriquée d'un seul tenant dans un bac de coussin de siège (8).

11. Siège de véhicule (1) selon la revendication 9, dans lequel la partie de cadre (12) de la joue latérale (10) est fabriquée comme un élargissement de partie de siège fixé à un bac de coussin de siège (8).

12. Siège de véhicule (1) selon l'une quelconque des revendications 9 ou 11, dans lequel la partie de cadre (12) de la joue latérale (10) est fabriquée d'un seul tenant dans un cadre d'un dossier (4).

13. Siège de véhicule (1) selon l'une quelconque des revendications 9 ou 12, dans lequel un dispositif de commande est prévu pour assurer la fonction d'une aide d'accès et qui actionne l'actionneur (20) de la joue latérale (10) tournée vers une portière de véhicule en fonction d'une information concernant un angle d'ouverture ou un degré d'ouverture de la portière de véhicule.
